Europäisches Patentamt

European Patent Office

Office européen des brevets

(19)

(11) Publication number: **0 085 109**
**B1**

## (12) EUROPEAN PATENT SPECIFICATION

(45) Date of publication of patent specification: **19.10.88**

(21) Application number: **82902206.0**

(22) Date of filing: **21.07.82**

(86) International application number:
**PCT/JP82/00282**

(87) International publication number:
**WO 83/00583 17.02.83 Gazette 83/05**

(51) Int. Cl.⁴: **H 01 M 4/14, H 01 M 10/12,**
**H 01 M 4/70**

## (54) LEAD STORAGE BATTERY AND METHOD OF PRODUCING THE SAME.

(30) Priority: **31.07.81 JP 121009/81**
**03.08.81 JP 115765/81 u**
**16.04.82 JP 64541/82**
**07.05.82 JP 66954/82 u**
**12.05.82 JP 80493/82**

(43) Date of publication of application:
**10.08.83 Bulletin 83/32**

(45) Publication of the grant of the patent:
**19.10.88 Bulletin 88/42**

(84) Designated Contracting States:
**CH DE FR GB LI NL**

(56) References cited:
**FR-A- 325 597**
**FR-A-2 311 414**
**FR-A-2 391 567**
**GB-A- 860 211**
**JP-B-39 021 393**
**JP-B-46 035 100**
**JP-B-48 040 365**
**US-A-3 472 696**
**US-A-3 973 991**

(73) Proprietor: **SANYO ELECTRIC CO., LTD.**
**18, 2 chome, Keihan-Hondori**
**Moriguchi-shi Osaka 570 (JP)**

(72) Inventor: **MORIOKA, Yuji**
**742-12, Shioo Tsuna-cho**
**Tsuna-gun Hyogo 656-21 (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

**Description**

The invention relates to a method of producing circinately wound lead-acid cells comprising the step of circinately winding a generating element comprising a positive and a negative current collector plate and two active layers separated from each other by use of a winding jig holding the initial end of the generating element and forming a core for the winding. Such method is disclosed, for example, in US—A—3 472 696 where the active layers are provided by embedding, at least partially, active material in paper carrier strips. The negative electrode comprises a sheet of lead having paper strips with lead embedded therein on either side; the positive electrode comprises a lead foil strip having paper strips coated with lead peroxide on either side. Foils and paper strips are stacked and subsequently rolled up in spiral fashion on a central core or mandrel. As paper strips have rather limited mechanical strength and a tendency to stretch under tension, reinforcing threads of cotton may be incorporated in the paper strips which adds additional steps to the manufacturing process.

FR—A—23 91 567 discloses lead-acid cells having thin-walled lead plates or foils the surfaces of which are provided with partial masks which are impermeable for the electrolyte. The surfaces of the lead foils which remain free of the masking layers are provided with active material. Separators are arranged between foils of opposite polarity. The strength of the masking layers may be increased by glass fibers. In the lead acid cells, the lead foils are arranged in plane stacks with the separators in between.

From GB—A—860 211 lead-acid type cells are known having synthetic resin nets incorporated in active parts to restrain the movement of said parts.

The latter two references do not disclose a method of producing circinately wound lead-acid cells.

It is, therefore, an object of the invention to improve the known method and to provide an efficient method of producing lead-acid cells having a circinately wound generating element, wherein the elements constituting the generating element can be strongly wound without being damaged. According to the present invention, this object is attained by a method of producing circinately wound lead-acid cells comprising the step of circinately winding a generating element comprising a positive and a negative current collector plate and two active layers separated from each other by use of a winding jig holding the initial end of the generating element and forming a core for the winding; where the generating element is produced by the following steps:

preparing a current collector assembly including two flat plate-like current collectors laminated with an insulator interposed therebetween,

preparing an active sheet material assembly including negative and positive material sheets laminated with a separator interposed therebetween, placing said active sheet material on one surface of said current collector assembly,

gripping with said winding jig the and initial end of said current collector assembly and

winding said generating element with the current collector assembly, so that the outer active sheet of the assembly comes into close contact with the plate-like current collector of the assembly.

According to the invention, since the current collector assembly is a part having relatively high mechanical strength, it is possible to firmly hold the current collector assembly by the winding jig. Further, at the start of the winding, the current collector assembly of high mechanical strength is first wound, so that even if this part is bent at a great curvature, there is no danger of the current collector assembly or the separator and active material sheet having a low mechanical strength being broken. Further, the press rollers or the like for imparting a tying force to the generating element in wound condition while winding it can be brought into contact with the current collector assembly of high mechanical strength at all times. For this reason, it is possible, without having to pay any special attention, to effect firm winding and increase the degree of contact of the negative and positive active material sheets with the respective corresponding current collectors.

According to a preferred embodiment of the invention, said active material sheets include an active material layer and a net-like body of resin embedded in said active material layer.

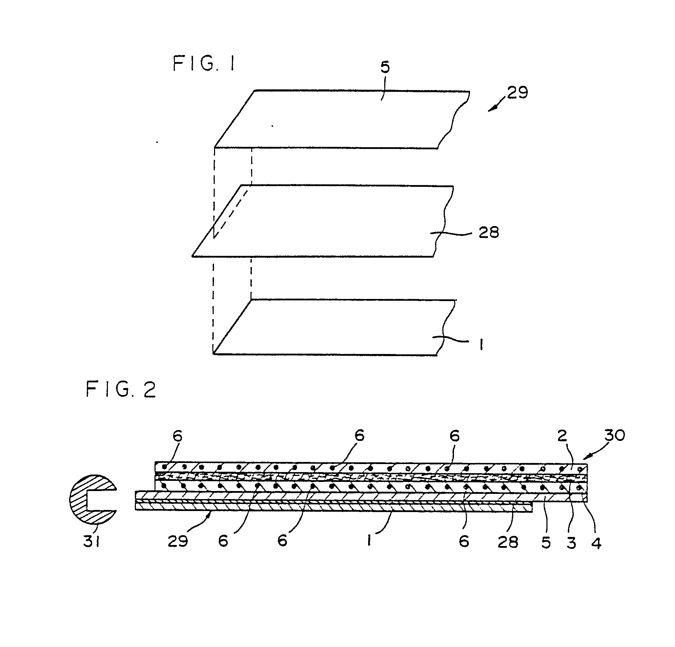

Referring to Figs. 1 through 4, the construction and the method of producing a cylindrical lead-acid cell are illustrated.

Referring to Fig. 1, two band-like flat plates of lead or lead alloy cut to predescribed size are prepared, serving as a positive current collector 1 and a negative current collector 5. These current collectors 1 and 5 are bonded to each other through a thin sheet-like insulator 28 of polyester or the like. In this way, a current collector assembly 29 is formed. In this case the insulator 28 may be greater in width than the current collectors 1 and 5. Then, even if the current collectors 1 and 5, when placed one upon the other, are deviated from each other, they can be insulated from each other.

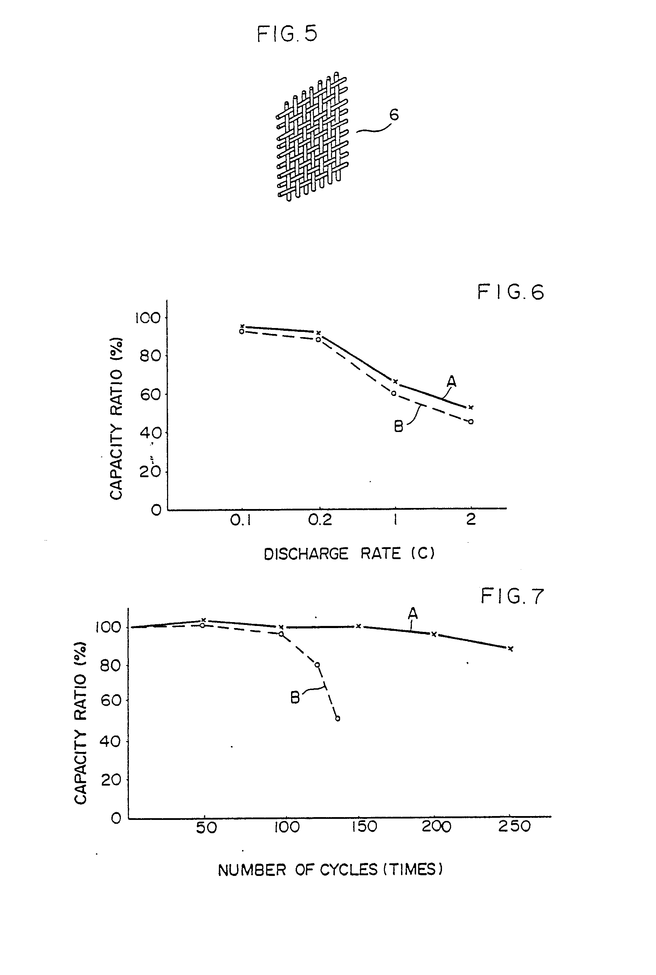

The net-like body 6 may be made of resin, e.g. of polypropylene, polyethylene, polyester or vinyl chloride and may be a net formed by weaving filaments, as shown in Fig. 5, or, though not shown, it may be a molding in net form. The separator 3 is a multi-separator formed of glass fiber.

Referring to Fig. 2, apart from the aforesaid current collector assembly 29, there is prepared an active material sheet assembly 30 including a positive active material sheet assembly 30 including a positive active material layer 2 and a negative active material layer 4 which are laminated with a separator 3 interposed therebetween. The active material sheet assembly 30 is placed on one surface of the current collector assembly 29, e.g., the surface where the negative current collector 5 is placed. Then, the negative

# 0 085 109

current collector 5 and the negative active material layer 4 come in contact with each other.

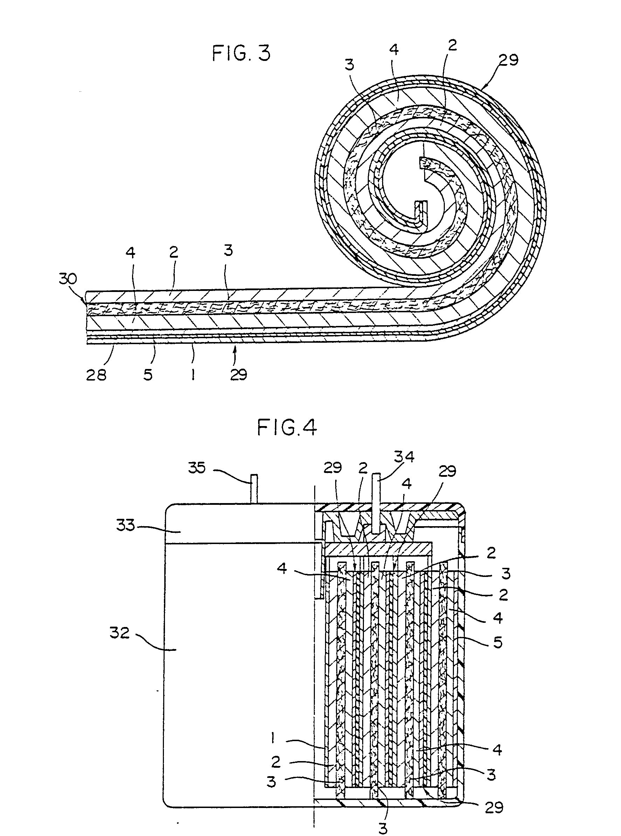

The generating element composed of the current collector assembly 29 and the active material sheet assembly 30 arranged as shown in Fig. 2 is then wound. In this case, a winding jig 31 having a cross-sectional shape shown in Fig. 2 is used. The winding jig 31 holds one end of the current collector assembly 29, and the generating element is tightly wound by using press rollers (not shown) exerting a suitable pressure, with the winding jig 31 as a core, so that the current collector assembly 29 is disposed outside the active material sheet assembly 30. An intermediate stage of the winding operating is shown in Fig. 3. In addition, in Fig. 3, the winding jig 31 and the net-like bodies 6 embedded in the active material layers 2 and 4 are omitted from the illustration.

In such winding, since it is a portion of the current collector assembly 29 having a relatively high mechanical strength that is held by the winding jig 31, the hold by the winding is started from this current collector assembly 29, there is no danger of damage to the generating element and tight winding becomes possible. Further, in the state of Fig. 3, when the generating element is wound, the press rollers (not shown) contacting the winding from opposite sides come to contact the current collector assembly 29. Therefore, tight winding can be effected without having to pay any special attention, unlike the case where the press roller contact an element of low mechanical strength such as the separator 3 or the active material layer 2 or 4.

Referring to Fig. 4, a cylindrical lead-acid cell having a circinately wound generating element is shown. In Fig. 4, the numeral 32 denotes an electrolytic container lid; and 34 and 35 denote outer terminals.

Referring to Figs. 6 and 7, the performances of a lead-acid cell (A) according to this invention and a conventional lead-acid cell (B) are compared. The conventional lead-acid cell (B) uses current collectors made of lead or lead alloy in net form by the expand working method. Fig. 6 compares the initial characteristics of the lead-acid cells, showing the degree of degradation in capacity (ampere-hours) where the discharge rate is changed from 0.1 C to 2 C, the vertical axis representing the percentage of capacity where the capacity when discharging a current of 0.05 C is taken as 100. As can be seen from Fig. 6, even if the discharge rate is increased, the lead-acid cell (A) according to the invention almost never differs in degradation of capacity from the conventional lead-acid cell (B), rather it can be said that its degradation is lower. Fig. 7 shows the cycle characteristic representing degradation of capacity when charge and discharge are repeated; the conditions for charge and discharge were such that charge was at constant voltage and discharge was effected with a current of 0.2 C, the final voltage for discharge being 1.7 V. As can be seen from Fig. 7, there is a remarkable difference between the lead-acid cells (A) and (B), the lead-acid cell (A) according to this invention exhibiting a superior cycle characteristic as compared with the conventional lead-acid cell (B).

The following table shows a comparison between the current collectors used in said lead-acid cells (A) and (B), the numerical value for each item being 100 for the current collector obtained by the expand working method.

TABLE

| | Material thickness | Weight | Price |
|---|---|---|---|
| This invention | 30 | 70 | 55 |
| Prior Art (expand plate) | 100 | 100 | 100 |

As is clear from the above table, the current collector according to this invention is lower in material thickness, weight and price than the conventional one, makes it possible to reduce the weight and size of lead-acid cells and is superior in reduction of cost.

## Claims

1. A method of producing circinately wound lead-acid cells comprising the step of circinately winding a generating element comprising a positive and a negative current collector plate and two active layers separated from each other by use of winding jig (31) holding the initial end of the generating element and forming a core for winding; characterized in that the generating element is produced by the steps:
preparing a current collector assembly (29) including two flat plate-like current collectors (1, 5) laminated with an insulator (28) interposed therebetween,
preparing an active sheet material assembly (30) including negative and positive material sheets (2, 4) laminated with a separator (3) interposed therebetween, placing said active sheet material assembly (30) on one surface of said current collector assembly (29),
gripping with said winding jig (31) the initial end of said current collector assembly (29) and winding said generating element with the current collector assembly (29), so that the outer active sheet (4) of the assembly (30) comes into close contact with the plate-like current collector (5) of the assembly (29).

2. A method according to claim 1, characterized in that said active material sheets (2, 4) include an active material layer and a net-like body (6) of resin embedded in said active material layer.

**Patentansprüche**

1. Verfahren zum Herstellen einer spiralförmig gewundenen Blei-Säure-Zelle mit dem Verfahrensschritt:

Spiralförmiges Aufwinden eines Grundelements, welches eine positive und eine negative Stromsammlerplatte aufweist und zwei aktive Schichten, die voneinander getrennt sind, durch Benutzung einer Wickellehre (31), die das Anfangsende des Grundelements hält und einen Kern für das Aufwickeln bildet, dadurch gekennzeichnet, daß das Grundelement hergestellt wird mittels der Verfahrensschritte:

Vorbereiten eines Stromsammleraufbaus (29) mit zwei Hachen plattenförmigen Stromsammlern (1, 5), die geschichtet sind mit einem Isolator (28) zwischen ihnen,

Vorbereiten eines aktiven Schichtmaterialaufbaus (30) mit negativen und positiven Schichten (2, 4) aus aktivem Material, zwischen denen ein Separator (3) geschichtet ist,

Plazieren des aktiven Schichtmaterialaufbaus (30) auf einer Oberfläche des Stromsammleraufbaus (29), Ergreifen des Anfangsendes des Stromsammleraufbaus (29) mit einer Wikellehre (31) und

Aufwickeln des Grundelements mit dem Stromsammleraufbau (29), so daß die äußere aktive Schicht (4) des Aufbaus (30) in engem Kontakt mit dem plattenförmigen Stromsammler (5) des Aufbaus (29) kommt.

2. Verfahren nach Anspruch 1, dadurch gekennzeichnet, daß die aktiven Materialschichten (2, 4) eine aktive Materiallage und einen netzförmigen Körper (6) aus Harz aufweisen, welcher in die aktive Materiallage eingebettet ist.

**Revendications**

1. Procédé pour fabriquer des cellules plomb-acide enroulées en spirale, comprenant l'étape consistant à enrouler en spirale un élément générateur comprenant des plaques collectrices de courant positive et négative et deux couches actives séparées l'une de l'autre, par l'utilisation d'un gabarit d'enroulement (31) retenant l'extrémité initiale de l'élément générateur et formant un noyau d'enroulement; caractérisé par le fait que l'élément générateur est produit par les étapes consistant à:

apprêter un ensemble (29) collecteur de courant comprenant deux collecteurs de courant aplatis (1, 5) du type plaquettes, stratifiés avec un isolant (28) interposé entre eux;

apprêter un ensemble (30) en matériau actif en feuilles comprenant des feuilles négative et positive (2, 4) de matériau actif stratifiées, avec un séparateur (3) interposé entre elles;

placer ledit ensemble (30) en matériau actif en feuilles sur l'une des surfaces dudit ensemble (29) collecteur de courant;

saisir, à l'aide dudit gabarit d'enroulement (31), l'extrémité initiale dudit ensemble (29) collecteur de courant; et

enrouler ledit élément générateur avec cet ensemble (29) collecteur de courant, de telle sorte que la feuille active externe (4) de l'ensemble (30) vienne au contact intime du collecteur de courant (5) du type plaquette de l'ensemble (29).

2. Procédé selon la revendication 1, caractérisé par le fait que lesdites feuilles (2, 4) de matériau actif comprennent une couche de matériau actif et un corps en résine (6) à structure réticulaire, noyé dans ladite couche de matériau actif.

FIG. 1

5

29

28

1

FIG. 2

6        6        6        2      30

31      29   6     6        1        6    28   5  3  4

FIG. 3

FIG.4

FIG. 5

FIG. 6

FIG. 7